# EUROPEAN PATENT SPECIFICATION

(11) **EP 4 026 944 B1**
(45) Date of publication and mention of the grant of the patent: **27.09.2023**
(21) Application number: 22150942.5
(22) Date of filing: 11.01.2022
(51) Int. Cl.: D06N 7/00, D04H 1/732, D04H 1/58, D04H 1/64, B32B 5/02, B32B 5/26, B32B 27/12

(54) **POLYMERIC WET-LAID NONWOVEN MAT FOR FLOORING APPLICATIONS**
POLYMERE NASSGELEGTE VLIESSTOFFMATTE FÜR FUSSBODENANWENDUNGEN
TAPIS NON-TISSÉ POLYMÉRIQUE POSÉ PAR VOIE HUMIDE POUR LES APPLICATIONS DE REVÊTEMENT DE SOL

(30) Priority: 11.01.2021 US 202117145459
(43) Date of publication of application: 13.07.2022
(73) Proprietor: Johns Manville, Denver, CO 80202 (US)
(72) Inventor: GUO, Zhihua, Ottawa Hills, 43615 (US); FERREIRA, Rui, Boulder, 80301 (US); NANDI, Souvik, Highland Ranch, 80130 (US); SHARPE, Philip Christopher, Weddington, 28104 (US)
(74) Representative: Dörr, Klaus

(56) References cited:
- EP-A1- 1 319 746
- EP-A1- 3 748 068
- WO-A1-88/04608

## Description

### BACKGROUND OF THE INVENTION

Glass nonwoven mats and polyester spunbond mats are commonly used as backing layers in flooring products such as carpet tiles, vinyl floor coverings, luxury vinyl tile, and as underlayment for sport surface, etc. Conventional glass mats reinforce and stabilize the backing layer so the flooring products have sufficient dimensional stability, see for example EP 3748068 A1. However, while providing good stiffness and dimensional stability, the glass mats are difficult to recycle. Additionally, the glass fibers make the flooring products itchy, particularly during installation. Conventional polyester spunbond mats fail to provide the necessary dimensional stability to serve as backing layers in flooring products. To remedy this, conventional polyester spunbond mats often include a glass fiber reinforcement scrim that is covered with the polymeric fibers. While this eliminates the itchiness and discomfort associated with glass mats, such mats are still difficult to recycle due to the presence of the glass fiber scrim. Therefore, improvements in flooring mats are desired.

### BRIEF SUMMARY OF THE INVENTION

In one embodiment, a flooring product is provided. The flooring product includes an upper flooring material and a glassless wet-laid nonwoven mat coupled with the upper flooring material. The glassless wet-laid nonwoven mat includes a plurality of polymeric fibers and a binder. The plurality of polymeric fibers have a linear mass density of between about 1.0 denier and 4.0 denier. The plurality of polymeric fibers have lengths of between about 6 mm and 25 mm. The binder has a loss on ignition of at least about 20%. The glassless wet-laid nonwoven mat has a hot/wet% of at least about 20%. The glassless wet-laid nonwoven mat has a basis weight of between 24.41 g/m² and 97.65 g/m² (0.5 lb/100 ft² and 2.0 lb/100 ft ²).

In some embodiments, the binder may include one or both of an acrylic-based binder and a styrene butadiene-based binder. The upper flooring material may include one or more of a fabric layer, a vinyl layer, and a sport surface layer. The plurality of polymeric fibers comprise one or more of polyethylene terephthalate (PET) fibers, acrylic fibers, polyester fibers, and polypropylene fibers. The glassless wet-laid nonwoven mat may include a plurality of layers. The flooring product may include at least one intermediate layer disposed between the upper flooring material and the glassless wet-laid nonwoven mat. The at least one intermediate layer may include a primary backing coupled with the upper flooring material and a secondary backing coupled with the primary backing. The flooring product may have a dimensional stability of less than or about 0.5% on both machine and cross machine directions. The dimensional stability, for example on a carpet tile, is measured using ASTM D7570 ("Standard Test Method for Evaluation of Dimensional Stability of Pile Yarn Floor Covering.

In another embodiment, a carpet tile is provided. The carpet tile may include a pile fabric layer, at least one backing coupled with the pile fabric layer, and a glassless wet-laid nonwoven mat coupled with the at least one backing. The glassless wet-laid nonwoven mat may include a plurality of polymeric fibers and a binder. The plurality of polymeric fibers may have a linear mass density of between about 1.0 denier and 4.0 denier The plurality of polymeric fibers may have lengths of between about 6 mm and 25 mm. The binder may have a loss on ignition of at least about 20%. The glassless wet-laid nonwoven mat may have a hot/wet% of at least about 20%.

In some embodiments, the at least one backing may include a primary backing coupled with the pile fabric layer and a secondary backing coupled with the primary backing. The adhesive may be applied to the second layer prior to placing the carpet tile against the floor substrate. The glassless wet-laid nonwoven mat may also include between about 0.01% and 3.0% by weight of a wettability additive. The wettability additive may include glycol ester. The glassless wet-laid nonwoven mat may have a thickness of between about 0.1 mm and 3.0 mm.

In another embodiment, a method of manufacturing a flooring product is provided. The method may include providing an upper flooring material and coupling a glassless wet-laid nonwoven mat with a lower surface of the upper flooring material. The glassless wet-laid nonwoven mat may include a plurality of polymeric fibers and a binder. The plurality of polymeric fibers may have a linear mass density of between about 1.0 denier and 4.0 denier. The plurality of polymeric fibers may have lengths of between about 6 mm and 25 mm. The binder may have a loss on ignition of at least about 20%. The glassless wet-laid nonwoven mat may have a hot-wet% of at least about 20%.

In some embodiments, the upper flooring material may include one or more of a fabric layer, a vinyl layer, and a sport surface layer. Coupling the glassless wet-laid nonwoven mat with the lower surface of the upper flooring material may include securing a top surface of the glassless wet-laid nonwoven mat to at least one backing layer that is positioned against the lower surface of the upper flooring material. The method may also include applying an adhesive to an exposed surface of the glassless wet-laid nonwoven mat and affixing a release liner over the adhesive. Forming the glassless wet-laid nonwoven mat may include passing the plurality of polymeric fibers and binder through an oven to cure the binder. The oven may be set to a temperature of less than about 176.7 °C (350 °F).

### BRIEF DESCRIPTION OF THE DRAWINGS

Various features, aspects, and advantages of the present invention will be better understood when the following detailed description is read with reference to the accompanying figures in which like characters represent like parts throughout the figures, wherein:
FIG. 1 is an isometric view of a flooring product according to embodiments.
FIG. 2 is a schematic view of a manufacturing system that produces a glassless wet-laid mat according to embodiments.
FIG. 3 is a method of forming a glassless wet-laid fiber mat according to embodiments.
FIG. 4 is a method of forming a dual layer glassless wet-laid fiber mat according to embodiments.
FIG. 5 is a schematic view of a manufacturing system that produces a carpet tile according to embodiments.

### DETAILED DESCRIPTION OF THE INVENTION

The ensuing description provides exemplary embodiments only, and is not intended to limit the scope, applicability, or configuration of the disclosure. Rather, the ensuing description of the exemplary embodiments will provide those skilled in the art with an enabling description for implementing one or more exemplary embodiments. It being understood that various changes may be made in the function and arrangement of elements without departing from the scope of the invention as set forth in the appended claims.

Embodiments of the present invention provide flooring mats that may be used in various flooring applications. Embodiments of the invention provide the necessary dimensional stability to flooring products that include a glassless wet-laid nonwoven mat that is formed with a mixture of polymeric fibers and a binder. Embodiments ensure that the flooring product is not itchy or otherwise uncomfortable to handle and therefore provides a surface that is suitable for handling during installation. By eliminating the use of glass fibers, embodiments further improve the recyclability of the nonwoven mats and/or resultant floor products. The polymeric fibers and binder may be selected to deliver comparable dimensional stability as delivered by conventional glass mat backing layers. Dimensional stability is important in a flooring applications. Dimensional stability, as understood in the art, is the ability of a flooring mat (or resultant product) to lie flat and remain flat and square on a floor surface under conditions of normal use as described in U.S. Patent No. 4,010,302, the entire contents of which are hereby incorporated by reference. The industry standard Aachen test (ASTM D7570) is used to determine the dimensional stability.

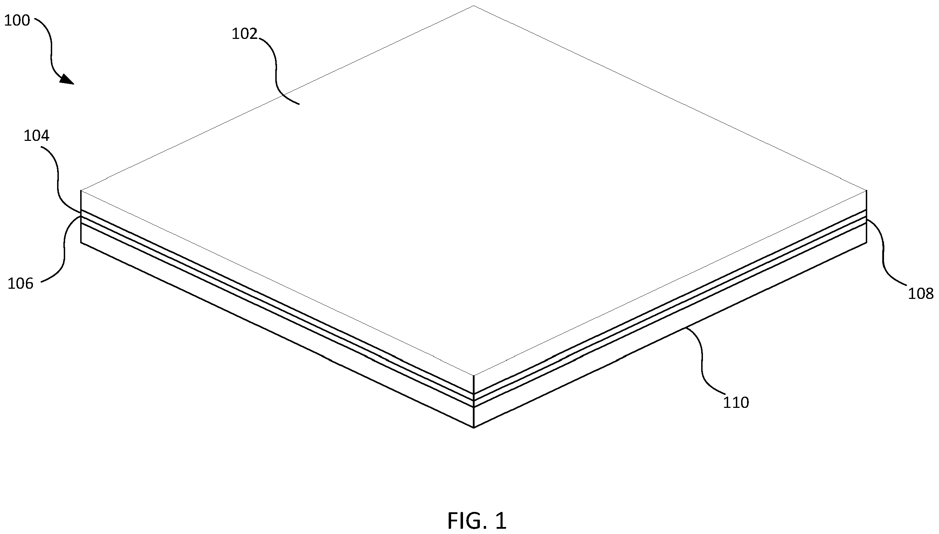

Turning now to the figures, a flooring product 100 according to the present invention is shown in FIG. 1. Flooring product 100 may include an upper flooring material 102 that serves as an exposed top surface of the flooring product 100. While shown here as being square-shaped, it will be appreciated that flooring product 100 may be cut or otherwise formed in any desired shape and can be sized to match any desired application. The upper flooring layer material 102 may be formed from any desired material to form a desired flooring product. For example, the flooring product 100 may be carpet or a carpet tile. In such embodiments, the upper flooring material 102 may be formed of a textile, such as a fabric (such as pile fabric) and/or other textile material. In other embodiments, the flooring product 100 may be cushion vinyl flooring (such as flooring tile) and/or luxury vinyl flooring (such as flooring tile). In such embodiments, the upper flooring material 102 may be formed from a vinyl layer. In other embodiments, the flooring product 100 may be a sport surface. In such embodiments, the upper flooring material 102 may be formed from a synthetic turf, hardwood court surface, and/or other sport surface. Floor product 100 may include an upper flooring material 102 positioned atop one or more backing layers and a polymeric wet-laid nonwoven mat. The upper flooring material 102 may be coupled with a polymeric nonwoven mat 110. In some embodiments, the upper flooring material 102 may be secured directly to the nonwoven mat 110. In other embodiments, the flooring product 100 may include one or more intermediate layers, such as backing layers, that are disposed between the upper flooring material 102 and the nonwoven mat 110. For example, the upper flooring material 102 may be secured to a primary backing layer 104. Primary backing layer 104 may be made of polyester and/or polypropylene. The primary backing layer 104 may be secured to a secondary backing 108, with a latex pre-coat 106 optionally being positioned between the primary backing 104 and the secondary backing 108 in some embodiments. The secondary backing 108 may be formed from a thermoplastic elastomer and/or a plastisol material, such as polyolefins, polyvinyl chloride (PVC), and/or polyurethane. While shown with two intermediate layers, it will be appreciated that the flooring product 100 may include any number of intermediate layers (including no intermediate layer).

The nonwoven mat 110 may include a plurality of polymeric fibers that are held together using a binder. As will be discussed in greater detail below, the polymeric mat 110 may be formed from a wet-laid process. The fibers of the nonwoven mat 110 may be 100% polymer fibers, without any glass fibers. The nonwoven mat 110 formed of synthetic polymeric fibers provides a soft, non-itchy exposed bottom surface that may be grasped by the installers. This layer helps prevent the installers from needing to directly touch an itchy glass layer. Additionally, by making nonwoven mat 110 with polymeric fibers, rather than glass fibers, the nonwoven mat 110 may be more easily recycled than similar glass mats, making the nonwoven mat 110 more environmentally friendly than traditional flooring mats. In some embodiments, the nonwoven mat 110 may be a single layer, while in other embodiments the nonwoven mat 110 may be formed of two or more layers.

The polymeric fibers of the nonwoven mat 110 may be formed from any polymeric material. For example, the polymeric fibers may be acrylic fibers, polyester fibers, polypropylene fibers, aramid fibers, nylon fibers, polyethylene fibers, rayon fibers, polyvinylidene fluoride (PVDF) fibers, polyethylene terephthalate (PET) fibers, and/or other polymeric fibers. In one particular embodiment, the polymeric fibers may be low shrink grade PET fibers. The polymeric fibers may be chopped fibers in some embodiments. The polymeric fibers of the nonwoven mat 110 may have linear mass densities of between about 1.0 denier and 4.0 denier, with between about 1.25 denier and 3.5 denier being common, and between about 1.5 denier and 3.0 denier being more common. Larger PET fibers (up to 25D) can be blended (as a minor component) to make the mat stiffer and therefore imparting better dimensional stability performance. For example, the nonwoven mat 110 may include between about 5% and 50%, oftentimes between about 15% and 30%, of coarse fibers (fibers having linear mass densities of greater than about 4.0 denier, oftentimes, between about 4.0 denier and 25 denier, more often between about 8 denier and 15 denier. In embodiments with coarse fibers, the nonwoven mat 110 may include between about 50% and 95% (commonly between 70% and 85%) of the finer fibers having linear mass densities up to 4.0 denier as described above. The polymeric fibers may have lengths of between about between about 6 mm and 25 mm, with lengths of between about 12 mm and 20 mm being common, and lengths of between about 15 mm and 18 mm being more common. Fibers with higher linear mass densities and/or longer fibers may provide greater dimensional stability to the nonwoven mat 110 and resultant floor product 100.

The polymeric fibers, which may be substantially the same size or may include a blend of differently sized fibers. For example, differently sized fibers may form layers of different densities within the mat 110. In embodiments in which the nonwoven mat 110 is formed from a combination of differently sized fibers, the different sized fibers may be homogenously dispersed or distributed throughout the nonwoven mat 110. The mat 110 includes one or more binders that bind the respective fibers together to form the nonwoven mat 110. The nonwoven mat 110 may include 60-95% of polymeric fibers and 5-40% of binder. The binder is typically homogenously or relatively evenly dispersed or distributed throughout the mat 110.

As indicated above, the use of larger polymeric fibers helps increase the dimensional stability of the mat 110 and resultant flooring product 100. The binder may be selected to further enhance the dimensional stability of the nonwoven mat 110 and the resultant flooring product 100. To help contribute to the dimensional stability, the binder may exhibit high cross-linking ability, which may increase the tensile strength and stiffness of the nonwoven mat 110 to improve the dimensional stability. To achieve the necessary cross-linking, the binder may include a self-cross-linking material and/or include a cross-linking additive. A hot/wet% may be indicative of the cross-linking ability of the binder. In some embodiments, a hot/wet% of the binder may be at least or about 30%, at least or about 35%, at least or about 40%, at least or about 45%, at least or about 50%, at least or about 55%, at least or about 60%, at least or about 65%, at least or about 70%, or more.

The binder may be selected to have a relatively low cure temperature, as subjecting the nonwoven mat 110 to high processing temperatures may lead to the formation of wrinkles and/or other defects within the nonwoven mat 110. For example, the binder may have a cure point that is less than or about 176.7°C (350 °F), less than or about 162.8°C (325 °F), less than or about 148.9°C (300 °F), less than or about 135°C (275 °F), less than or about 121.1°C (250 °F), less than or about 107.2°C (225 °F), or less, which enables a curing process for the nonwoven mat 110 to be conducted at a sufficiently low temperature so as to not generate wrinkles. The binder may have a loss on ignition (LOI) of at least or about 15%, at least or about 20%, at least or about 25%, at least or about 30%, at least or about 35%, or more, which may further help increase the tensile strength and dimensional stability of the nonwoven mat 110 and resultant flooring product 100.

The binder may be based on acrylic and/or styrene butadiene chemistry. The binder may be or include an acrylic copolymer latex. For example, the binder may contain commercially available products such as Hycar 26138 (supplied by Lubrizol), RediBond 5330 (supplied by Ingredion Inc.), Aerotex 3030 (supplied by Cytec Industries Inc.), and/or QRXP 1692 (supplied by The Dow Chemical Company). Other binders are possible. For example, in some embodiments, the binder may be a thermoset binder based on urea formaldehyde (UF), melamine formaldehyde (MF), and/or other binders.

In some embodiments, an additive may be included that may help enhance the wettability of the binder to polymeric fibers and may improve bondage and/or strength. In some embodiments, the additive may include glycol ester and/or an amine oxide-based material such as Mykon(R) NRW-3 (supplied by Omnova Solutions). When present, the nonwoven mat 110 may include between about 0.01 and 3 wt. % of the wettability additive, which may reduce the surface energy of the polymeric fibers to enhance adhesion.

In some embodiments, the nonwoven mat 110 may have a thickness of between about 0.1 mm and 3 mm, commonly between about 0.15 mm and 2 mm, more commonly between about 0.2 mm and 1 mm. The nonwoven mat 110 may have a basis weight of between or about 0.55 lb/100 ft² and 1.75 lb/100 ft², between or about 0.6 lb/100 ft² and 1.5 lb/100 ft², between or about 0.65 lb/100 ft² and 1.25 lb/100 ft², between or about 0.7 lb/100 ft² and 1.0 Ib/100 ft², between or about 0.75 lb/100 ft² and 0.9 lb/100 ft². The conversion rate from lb/ft² to g/m² is 4882.43.The nonwoven mat 110 may have a machine direction tensile strength of between about 40 Ib/3 in and 150 Ib/3 in, between about 50 Ib/3 in and 125 Ib/3 in, between about 55 Ib/3 in and 115 Ib/3 in, or between about 60 Ib/3 in and 110 Ib/3 in. The conversion rate for tensile strength is 1lb/3in = 59.5g/cm The nonwoven mat 110 may have a cross-machine direction tensile strength of between about 25 lb/3 in and 100 lb/3 in, between about 35 lb/3 in and 90 lb/3 in, between about 40 lb/3 in and 80 lb/3 in, or between about 45 lb/3 in and 70 lb/3 in. The nonwoven mat 110 may have a total tensile strength of between about 65 lb/3 in and 200 lb/3 in, between about 80 lb/3 in and 175 lb/3 in, between about 85 lb/3 in and 150 lb/3 in, or between about 90 lb/3 in and 125 lb/3 in. The nonwoven mat 110 may have a machine direction stiffness of between or about 7.5 g cm to 50 g cm, between or about 10 g cm to 40 g cm, or between or about 15 g cm to 30 g cm. The nonwoven mat 110 may have a cross-machine direction stiffness of between or about 7.5 g cm to 50 g cm, between or about 10 g cm to 40 g cm, or between or about 15 g cm to 30 g cm. The nonwoven mat 110 may have an air permeability of at least or about 400 cubic feet per minute per square foot (CFM/ft²), at least or about 600 CFM/ft², at least or about 650 CFM/ft², at least or about 700 CFM/ft², at least or about 750 CFM/ft², at least or about 800 CFM/ft², at least or about 850 CFM/ft², at least or about 900 CFM/ft², at least or about 950 CFM/ft², at least or about 1000 CFM/ft², or more. Conversion rate is 1CFM/ft² = 0.3 m³/min m².

In some embodiments, the thickness of the mat 110 may be less than or about 20%, less than or about 15%, less than or about 10%, less than or about 5%, less than or about 3%, less than or about 1% or less of an overall thickness of the flooring product 100. The upper flooring material 102 and nonwoven mat 110 may be joined (along with any intermediate layers) to produce the flooring product 100. The flooring product may have a dimensional stability of less than or about 0.5%, less than or about 0.4%, less than or about 0.3%, less than or about 0.2%, less than or about 0.15%, less than or about 0.10%, or less.

In some embodiments, the nonwoven mat 110 may be formed as a single layer. In other embodiments, the nonwoven mat 110 may be formed of two or more layers of polymeric fibers. In such embodiments, each layer of the nonwoven mat 110 may be identical and/or some layers may be different. For example, one or more of the layers may use different polymeric fibers (a different type of fiber, different fiber diameter, different length, etc.), a different binder, and/or a different polymer/binder ratio, etc.

The nonwoven mat 110 may include one or more layers of fibers made in a single step or process. In other words, in embodiments in which the nonwoven mat 110 includes multiple layers, the layers of the mats are not separately formed and then combined in a later stage or process (i.e., separately made and then bonded together). Rather, the layers are formed simultaneously, which results in a mat 110 that functions as a single layer in terms of structure and integrity despite having different fiber compositions and/or layer densities. Accordingly, the mats discussed may be produced at lower cost and in less time.

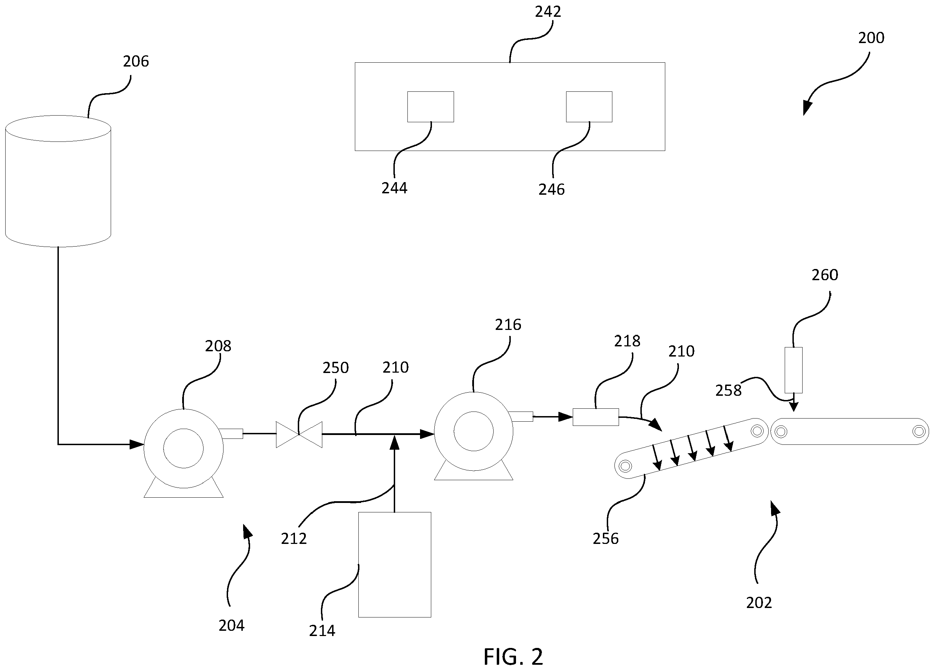

FIG. 2 is a schematic view of a manufacturing system 200 that produces a mat 110. In operation, the manufacturing system 200 is able to produce a single or multilayered mat in a single step/process. That is the layers of the mat are not separately formed and then combined at a later stage or process (i.e., separately made and then bonded together). The mats 110 produced by the manufacturing system 200 may therefore be produced at lower cost and in less time.

The manufacturing system 200 includes at least one fluid line that delivers polymeric fibers to a hydroformer 202 that forms each layer of the mat 110 simultaneously. While a hydroformer 202 is illustrated, a fourdrinier wire or a delta former may also be used to produce the layers of the mat 110 in a single step/process.

In single layer embodiments, the manufacturing system 200 may use a fluid line 204 to deliver polymeric fibers from at least one fiber source 206 to the hydroformer 202. The fiber source 206 may contain one or more types of polymeric fibers (e.g., differently sized polymeric fibers, polymeric fibers made from different materials, or a combination thereof). Fluidly coupled to the fiber source 206 is a pump 208 (e.g., a thick stock pump) that pumps a fluid 210 containing the polymeric fibers. For example, the fluid 210 may include water, viscosity modifiers, dispersants, defoamers, etc. mixed with the polymeric fibers. After passing through the pump 208, the fluid 210 is diluted with a dilution fluid 212 (e.g., water, viscosity modifiers, dispersants, defoamers, or a combination thereof) stored in a dilution tank 214. By diluting the polymeric fibers, the manufacturing system 200 may enable a more even distribution of the polymeric fibers in the nonwoven mat 110 by the hydroformer 202. The dilution fluid 212 combines with the fluid 210 before the fluid 210 enters a second pump 216. The pump 216 (e.g., thin stock pump) may facilitate mixing of the fluid 210 and the dilution fluid 212 before delivery to the hydroformer 202. After exiting the pump 216, the fluid 210 enters an inlet pipe 218 of the hydroformer 202. The inlet pipe 218 directs the fluid 210 into the hydroformer 202, which forms the mat 110 by removing the fluid 210 and dilution fluid 212 from the fluid/coarse fiber mixture as the mixture is poured onto the hydroformer 202.

In embodiments in which the nonwoven mat 110 is formed of multiple layers, additional fluid lines are used to supply polymeric fibers from one or more fiber sources (which may be the same or different than fiber source 206) to the hydroformer 202. The polymeric fibers may be pumped within a second fluid (such as water, viscosity modifiers, dispersants, defoamers, etc. mixed with the polymeric fibers) to be diluted with a dilution fluid (e.g., water, viscosity modifiers, dispersants, defoamers, or a combination thereof) stored in an additional dilution tank. The dilution fluid may be combined with the second fluid before the second fluid enters a second pump that enables mixing of the second fluid and the dilution fluid before delivery to the hydroformer 202. After exiting the second pump, the second fluid enters a inlet pipe of the hydroformer 202 additional second layer atop the initial layer of the mat 110 by removing the second fluid and dilution fluid from the fluid/fiber mixture as the mixture is poured onto the hydroformer 202 atop the first layer of the mat 110 that was immediately formed by the hydroformer 202. The second fluid is directed or poured atop the first layer of the mat 110 as the fluid is being drained from the first fluid 210 such that the additional layer and the initial layer are formed simultaneously by the hydroformer 202. Additional layers may be formed in a similar manner.

The flow of the fluid 210 (and fluid for additional layers) through the manufacturing system 200 may be controlled with a controller 242. The controller 242 may include one or more processors 244 that execute instructions stored on one or more memories 246 to control the operation of various valves as well as the pumps. For example, one or more valves 250 coupled with the fluid lines may be controlled, which enables the controller 242 to control the amount of various types of polymeric fibers to between 0 and 100 percent in a given layer of the nonwoven mat 110, and more commonly to the percentages described in the mat embodiments herein. Additionally, by controlling the flow of the fluids the controller 242 may increase or decrease thickness of the mat 110 and/or respective layers thereof.

As the fluids (such as fluid 210) enter the hydroformer 202 the fluids contact a conveyer belt 256 that drains a substantially majority of the fluid fluids leaving behind the polymeric fibers of the one or more layers. The manufacturing system 200 may then apply one or more binders 258. In some embodiments, the binder 258 may include resinous binders such as urea formaldehyde, modified urea formaldehyde, acrylic and/or styrene-butadiene resins, modified acrylic resins, among other types of binders. Wetting agents may also be included in the binder, such as glycol ester and the like.

These binders 258 may be stored in one or more binder sources 260. The binder(s) 258 may be applied to the polymeric fibers by moving the polymeric fibers under a spray or waterfall of binder. Any excess binder may then flow through the fibers. In this way, the manufacturing system 200 may bind the fibers in their respective layers as well as bind any layers together without performing multiple binding steps/processes. Stated differently, the manufacturing system 200 may simultaneously bind the fibers in the respective layers and bond the fiber layers together in a single step. The application of the binder(s) 258 to multiple layers simultaneously results in the binder being relatively evenly distributed through and between the various layers without forming or defining a binder layer between the layers. Stated differently, a separate or individual layer of binder is not formed or defined at an interface or boundary between the layers as occurs in conventional systems where the layers are formed individually and combined in a subsequent process. The relatively even distribution of the binder(s) 258 may increase the strength of the mat and/or reduce issues such as delamination of the layers. In addition, the mat described herein has a less defined boundary between multiple layers since any layers are simultaneously formed. Rather, the mat 110 has a relatively gradual transition from the one layer to another layer due to the simultaneous formation of the layers, which may increase the strength and/or reduce issues such as delamination of the layers.

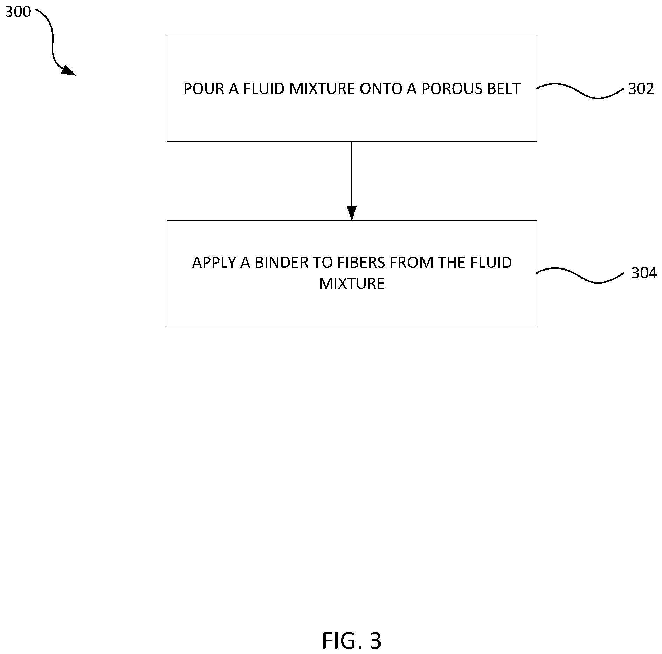

Referring now to FIG. 3, illustrated is a method 300 of forming a fiber mat. In a specific embodiment, the fiber mat may be a polymeric mat 110 for a flooring product, such as flooring product 100 described herein. At block 302, a fluid mixture is poured or applied onto a porous belt or surface. The fluid mixture includes polymeric fibers that are homogenously mixed or dispersed within a fluid. In a specific embodiment, the fibers include polymeric fibers having linear mass density of between 1.0 denier and 4.0 denier. When the fluid mixture is applied or poured atop the porous belt or surface, the fluid is drained or removed from the fluid mixture so that a layer of the polymeric fibers is formed atop the porous belt or surface. In some embodiments a vacuum may be applied to the porous belt or surface to facilitate in removal of the fluid from the fluid mixture.

At block 304, a binder is applied to the polymeric fibers in order to bind the various fibers. After applying the binder, the binder may be cured to form the nonwoven mat 110. For example, the polymeric fibers coated with binder may be passed through one or more ovens that heat and cure the binder. In some embodiments, the oven may be maintained at a temperature of less than or about 176.7°C (350 °F), less than or about 162.8°C (325 °F), less than or about 148.9°C (300 °F), less than or about 135°C (275 °F), less than or about 121.1°C (250 °F), less than or about 107.2°C (225 °F), or less. In some embodiments, the one or more ovens may be operated in a multistage arrangement, with the mat 110 being cured at multiple temperatures. For example, the mat 110 may be passed through the oven(s) at a first temperature and subsequently at a second higher temperature.

In a specific embodiment, the fiber mat that is formed according to the method 300 of FIG. 3 may be a mat for a flooring product, such as flooring product 100. In such embodiments, the mat 110 may be applied to the upper flooring material 102 and/or an intermediate layer during formation of the flooring product 100. In a particular embodiment, the mat 110 may be applied to a backing material of a carpet tile. The polymeric fibers of the mat 110 may be capable of absorbing a material of the carpet tile, such as the backing, when the mat is positioned against the backing during formation of the carpet tile.

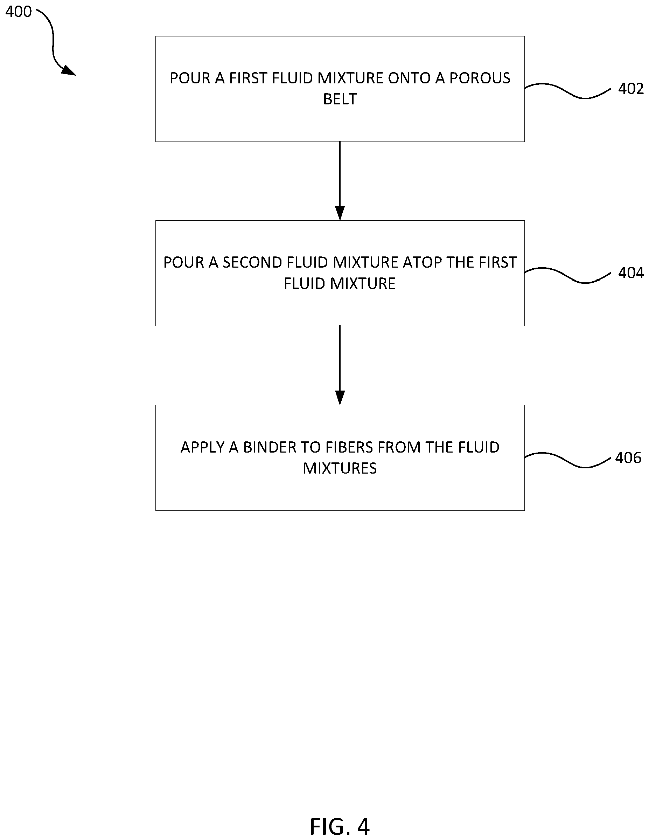

Referring now to FIG. 4, illustrated is a method 400 of forming a dual layer fiber mat. In a specific embodiment, the fiber mat may be a polymeric mat 110 for a flooring product, such as flooring product 100 described herein. At block 402, a first fluid mixture is poured or applied onto a porous belt or surface. The first fluid mixture includes a first group of polymeric fibers that are homogenously mixed or dispersed within a first fluid. In a specific embodiment, the first group of fibers include polymeric fibers having a linear mass density of between about 1.0 denier and 4.0 denier. When the first fluid mixture is applied or poured atop the porous belt or surface, the first fluid is drained or removed from the first fluid mixture so that a layer of the first group of fibers is formed atop the porous belt or surface. In some embodiments a vacuum may be applied to the porous belt or surface to facilitate in removal of the first fluid from the first fluid mixture.

At block 404, a second fluid mixture is poured or applied onto the porous belt or surface atop the layer of the first group of fibers. The second fluid mixture includes a second group of polymeric fibers that are homogenously mixed or dispersed within a second fluid. The second group of polymeric fibers may be the same or different than the first group of polymeric fibers. For example, the second group of polymeric fibers may be longer and/or have greater linear mass densities than the fibers in the first group of polymeric fibers.

When the second fluid mixture is applied or poured atop the porous belt or surface, the second fluid is drained or removed from the second fluid mixture so that a layer of the second group of fibers is formed atop the porous belt or surface and atop the layer of the first group of fibers. The second fluid mixture is poured or applied onto the porous belt or surface as the first fluid is being removed from the first fluid mixture. As such, the layer of the first group of fibers is typically not fully formed or defined until after the second fluid mixture is poured or applied onto the porous belt or surface. In this manner, the layer of the first group of fibers and the layer of the second group of fibers are formed simultaneously atop the porous belt or surface. The second fluid mixture may be poured directly vertically above the first fluid layer and thus, both layers may be poured simultaneously atop each other. Stated differently, since the layer of the first group of fibers is not fully formed or defined until after the second fluid mixture is poured or applied onto the porous belt or surface, the layer of the first group of fibers is formed or defined at essentially the same time as the layer of the second group of fibers is formed or defined atop of the porous belt or surface. Since the layer of the first group of fibers and the layer of the second group of fibers are formed simultaneously, the degree of intermeshing or entangling of the fibers at the interface of the two layers is significantly greater than in conventional fiber mats where one or both of the layers are fully formed or defined prior to application of the other layer. In some embodiments, the second fluid mixture may be poured or applied onto the porous belt or surface within 76.2cm (30 inches) of where the first fluid mixture is poured or applied onto the porous belt or surface. In such instances, the fiber mat forming section (i.e., porous belt) may be extremely long such that the first layer is still dewatering when the second fluid mixture is applied to the belt. In other instances, the second layer may be poured within 30.48cm (12 inches) or within 15.24cm (6 inches) after the first layer is poured or applied to the porous belt. In such instances, the first layer may be partially dewatered, but still in the process of forming on the porous belt. In some embodiments, the second layer may be poured atop the porous belt first and then the first layer may be poured atop the second layer. In some embodiments, a more dense layer may be formed on the bottom while a less dense layer is simultaneously formed on the top.

At block 406, a binder is simultaneously applied to the layer of the first group of fibers and the layer of the second group of fibers in order to bind the two layers together and to bind the various fibers within each layer together. In most embodiments, a binder is not applied to either layer prior to block 406, or stated differently, the layers are typically free of a binder prior to block 406. The simultaneous application of the binder to the two layers, which are typically free of a binder prior to block 406, results in a more homogenous or uniform distribution of the binder throughout the fiber mat. In addition, the simultaneous application of the binder to the two layer results in the fiber mat being free of a concentrated binder layer at the interface of the two layers. Conventional fiber mats typically include a binder concentration at the interface between layers because the fiber layers are formed separately and then adhered or bonded together via an additional binder or other adhesive. The additional binder bonds the two layers together and is typically concentrated at the interface between the two layers. In contrast, the process described herein is able to form a multiple layer fiber mat construction in which the binder is relatively homogenously or uniformly dispersed throughout the mat rather than being concentrated in one or more areas. In additional, a single binder may be employed to both bond or adhere the layers together and bond or adhere the fibers of the various layers together. Conventional mats commonly require the use of multiple binders in order to bond the fibers of the separate layers together and to subsequently bond the layers together.

After applying the binder, the binder may be cured to form the nonwoven mat 110. For example, the polymeric fibers coated with binder may be passed through an oven that heats and cures the binder. In some embodiments, the oven may be maintained at a temperature of less than or about 176.7°C (350 °F), less than or about 162.8°C (325 °F), less than or about 148.9°C (300 °F), less than or about 135°C (275 °F), less than or about 121.1°C (250 °F), less than or about 107.2°C (225 °F), or less.

In a specific embodiment, the fiber mat that is formed according to the method 400 of FIG. 4 may be a mat for a flooring product, such as flooring product 100. In such embodiments, the mat may be applied to the upper flooring material 102 and/or an intermediate layer. For example, in a carpet tile, the mat 110 may be applied to a secondary backing during formation of the carpet tile. The layer of the first group of fibers may be capable of absorbing a material of the carpet tile, such as the secondary backing, when the mat is positioned against the secondary backing during formation of the carpet tile. In some embodiments, the layer of the second group of fibers may partially absorb the material of the secondary backing, but may block the material from passing or absorbing through the mat to an exterior surface of the second layer. In this manner, the mat may be adhered or bonded with the secondary backing due to the absorption of the secondary backing material within the mat, but the material may not be visible on the exterior surface.

It should be noted that while the method 400 of FIG. 4 is described as simultaneously forming two layers, the method 400 could be employed to simultaneously form three or more layers as described. For example, block 404 could be repeated with a third fluid mixture, a fourth fluid mixture, and the like to form additional layers atop the layer of the second group of fibers. The binder could then be simultaneously applied to each of the layers at block 406 as desired. Thus, the method 400 of FIG. 4 is not limited to two layer constructions.

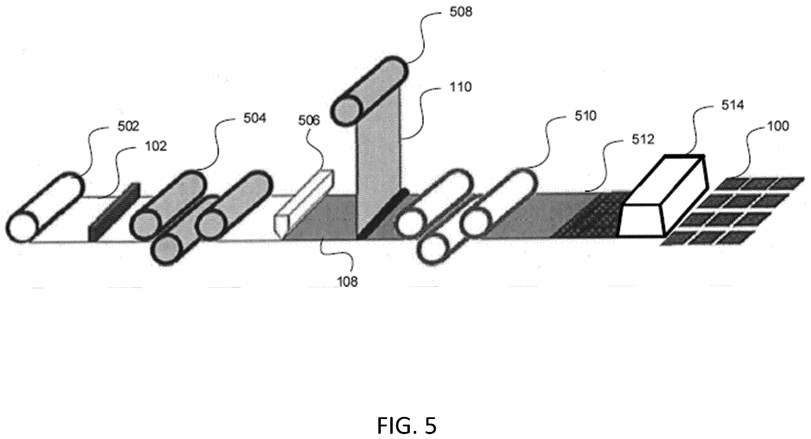

FIG. 5 depicts a single-pass manufacturing system 500 for manufacturing a flooring product, such as flooring product 100, in accordance with the present invention. System 500 includes a surfacing source 502 that supplies a layer of an upper flooring material 102. For example, if flooring product 100 is a carpet tile, the upper flooring material, may include a pile fabric (or other suitable fabric for carpet applications) having a primary backing 104. This upper flooring material 102 may be passed through a roller assembly 504 being passed through an extruder 506. The extruder 506 may extrude or otherwise supply a thermoplastic or plastisol material that serves as a secondary backing 108 (or other intermediate layer) to the upper flooring material 102. In some embodiments, prior to passing through the extruder 506, the upper flooring material 102 may optionally be coated with a pre-coat 106, such as a latex pre-coat, which may help strengthen the bond between the upper flooring material 102 with the upper flooring material 102. A nonwoven mat source 508 is provided downstream of the extruder 506 and supplies a wet-laid nonwoven polymeric mat 110 against the extruded secondary backing 108. In some embodiments, rather than using an extruded layer and/or pre-coat, an adhesive may be used to bond one or more layers of the flooring product 100.

The mat 110 may be produced separately using manufacturing system 200 and/or processes 300 and/or 400 as described above. The upper flooring material 102, any intermediate layers (such as primary backing 104 and/or secondary backing 108), and nonwoven mat 110 (and latex pre-coat 106 when included) may then pass through a second roller assembly, such as a nip chill roller assembly 510, which may press the respective layers together and cause the layers to bond and set with one another due to the lower temperature of the chill rollers of the nip chill roller assembly 510. In some embodiments, the secondary backing layer 108 is plastisol in nature. The upper flooring material 102, any intermediate layers (such as primary backing 104 and/or plastisol secondary backing 108), and nonwoven mat 110 (and latex pre-coat 106 when included) may then pass through a set of heated ovens to cure the plastisol and/or adhesive and bond the different layers to one another. Once cooled/cured, the various layers form a roll and/or sheet of flooring product 512, which may be provided to a cutting apparatus 514, which cuts the flooring product 512 into pieces of a desired size (such as individual carpet tiles). In some embodiments, prior to or after cutting the flooring product an adhesive layer, such as a pressure sensitive adhesive layer, may be applied to the exposed bottom surface of the flooring product 100, oftentimes along with a non-stick release liner.

### EXAMPLE 1

Nonwoven mats with PET (Polyethylene terephthalate) fibers were produced using a pilot mat machine. Some mats used 1.5 denier (D) 6 mm PET fibers and/or 1.5 denier (D) 10 mm PET fibers supplied by Engineered Fibers Technology, LLC (EFT). Some mats used 3.0 D 1.91cm (¾") PET fibers supplied by MiniFIBERS and/or 13 D 1.27cm (½") PET fibers supplied by William Barnet & Son, LLC (Barnet). Binder 1 contained Hycar 26138 and Aerotex 3030. Binder 2 contained QRXP 1692 and RediBond 5330. Binder 3 contained 90% Hycar 26138 and 10% RediBond 5330 (%s are solids based). A two-zone oven was equipped with the pilot wet-laid machine. The two zones were set at 165.6°C (330 °F) and 193.3°C (380 °F), respectively, for Binders 1 and 2. The two zones were set at 98.9°C (210 °F) and 107.2°C (225 °F), respectively, for Binder 3. The line speed was 3.05m/min (10 feet per minute (fpm)) line speed. Table 1 details the resultant mats in comparison with a number of commercially 14 vailable glass-based flooring mats.

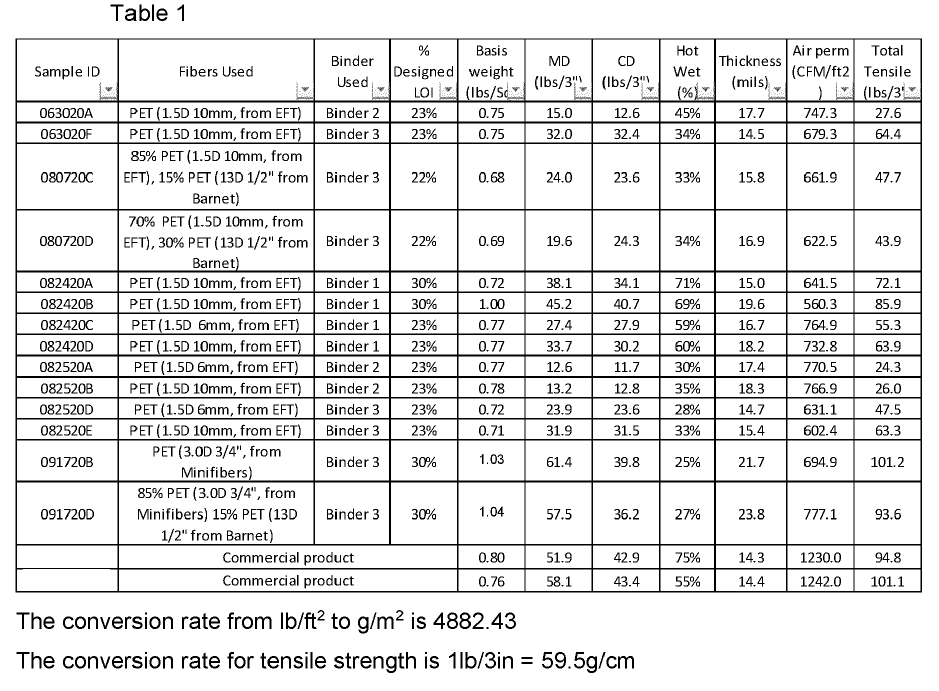

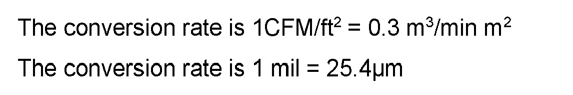

As detailed above, several physical properties were tested for each mat and compared to data from the commercially available glass flooring mats. Basis weight was measured by weighing of handsheet samples (typically cut 30.48cm X 30.48cm (12"X12")) with the unit Ibs/sq (i.e., lbs/100 sq. ft2). Tensile strength of 7.62cmX30.48cm (3"X12") was measured using an ASTM method by an Instron machine. Tensile strength was measured in the machine direction (MD) and the cross-machine direction (CD). Total tensile is the sum of the two. For hot/wet (%) testing, 7.72cmX30.48cm (3"X12") strips need to be submerged in water bath with Deionized (DI) water at 81° ± 1° C (180°± 2° F) for 10 minutes. Typically, strips from cross machine (CD) direction are used. Hot Wet (%) is average of CD wet tensile strength divided by average of CD dry tensile strength. Thickness was measured with a gauge under pressure of 1.686 kPa (28 ounce (784 gram) contact pressure and 7.62cm (3 inch) diameter foot). Air permeability ("air perm") was measured by the Frazier test, which is described by ASTM Standard Method D737. This test was carried out at a differential pressure of about 1,27cm (0.5 inches) of water (125 Pa).

From the data, it showed longer fibers, higher binder LOI and higher basis weight all helped increase tensile strength of the PET mats. In particular, for PET mats with ~1 Ib/sq basis weight and 30% binder LOI, all-PET mats "091720B" and "091720D" had total tensile comparable to the commercial glass flooring mats which are used as reinforcement mat in flooring products such as carpet tiles.

### Example 2

Nonwoven mats with PET fibers were produced using a pilot mat machine. Some mats used 1.5D 15 mm PET fibers and/or 3.0D 18mm PET fibers. Binder 3 was the same as in Example 1 and Binder 4 contained Hycar 26138. A two-zone oven was equipped with the pilot wet-laid machine. For both Binder 3 and Binder 4, the two zones were set at 98.9°C (210 °F) and 107.2°C (225 °F), respectively. The line speed was set at 3.05m/min (10 feet per minute (fpm)). Table 2 details the resultant glass free mats in comparison with a number of commercially avialable glass-based flooring mats.

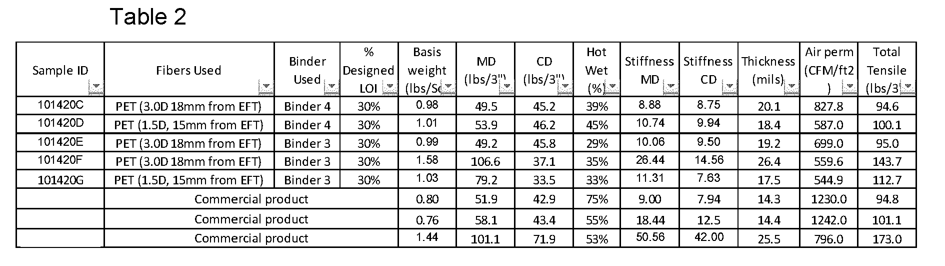

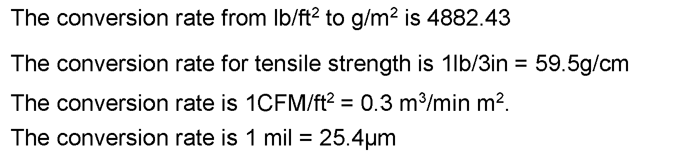

Typical physical properties were tested on the samples. In addition, stiffness was tested according to TAPPI T 489 om-92 "Stiffness of paper and paperboard (Taber-type stiffness tester)".

As expected as well, all-PET mat made with coarser fibers have higher air permeability than with finer fibers. Typically, a glass mat helps dimensional stability of flooring products tremendously due to the rigidity of glass fibers. In a polymeric mat, choice of binder and binder LOI% on the product are important to provide excellent strength and dimensional stability of flooring products. Hycar 26138 is acrylic copolymer latex. Other binders, for example, based on SB (styrene-butadiene) chemistry can be good binder candidates for all-PET wet-laid mats. In addition, other binders which are commonly used for non-woven glass mats can be good candidates as well, such as thermoset binder based on UF (Urea Formaldehyde), MF (Melamine Formaldehyde), etc. A binder LOI higher than 20% may provide good tensile strength and dimensional stability of flooring products. Furthermore, to enhance wettability of binder to PET substrate and bondage/strength, glycol ester can be a good additive with 0.01-3 wt.% of the mat weight. Examples may include TegMeR 812, TegMeR 810, TegMeR 804 SPECIAL, etc. supplied by Hallstar.

While several embodiments and arrangements of various components are described herein, it should be understood that the various components and/or combination of components described in the various embodiments may be modified, rearranged, changed, adjusted, and the like. For example, the arrangement of components in any of the described embodiments may be adjusted or rearranged and/or the various described components may be employed in any of the embodiments in which they are not currently described or employed. As such, it should be realized that the various embodiments are not limited to the specific arrangement and/or component structures described herein.

In addition, it is to be understood that any workable combination of the features and elements disclosed herein is also considered to be disclosed. Additionally, any time a feature is not discussed with regard in an embodiment in this disclosure, a person of skill in the art is hereby put on notice that some embodiments of the invention may implicitly and specifically exclude such features, thereby providing support for negative claim limitations.

Having described several embodiments, it will be recognized by those of skill in the art that various modifications, alternative constructions, and equivalents may be used without departing from the scope of the invention. Additionally, a number of well-known processes and elements have not been described in order to avoid unnecessarily obscuring the present invention. Accordingly, the above description should not be taken as limiting the scope of the invention.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed. The upper and lower limits of these smaller ranges may independently be included or excluded in the range, and each range where either, neither or both limits are included in the smaller ranges is also encompassed within the invention, subject to any specifically excluded limit in the stated range. Where the stated range includes one or both of the limits, ranges excluding either or both of those included limits are also included.

As used herein and in the appended claims, the singular forms "a", "an", and "the" include plural referents unless the context clearly dictates otherwise. Thus, for example, reference to "a process" includes a plurality of such processes and reference to "the device" includes reference to one or more devices and equivalents thereof known to those skilled in the art, and so forth.

Also, the words "comprise," "comprising," "include," "including," and "includes" when used in this specification and in the following claims are intended to specify the presence of stated features, integers, components, or steps, but they do not preclude the presence or addition of one or more other features, integers, components, steps, acts, or groups.

## Claims

1. A flooring product, comprising:
an upper flooring material;
a glassless wet-laid nonwoven mat coupled with the upper flooring material, the glassless wet-laid nonwoven mat comprising:
a plurality of polymeric fibers and a binder, wherein:
the plurality of polymeric fibers have a linear mass density of between about 1.0 denier and 4.0 denier;
the plurality of polymeric fibers have lengths of between about 6 mm and 25 mm;
the binder has a loss on ignition of at least about 20%; and
the glassless wet-laid nonwoven mat has a hot-wet% of at least about 20%, said hot/wet (%) testing is performed on 7.62cmX30.48cm (3"X12") strips being submerged in water bath with Deionized (DI) water at 81° ± 1° C (180°± 2° F) for 10 minutes and hot-wet (%) is average of CD
wet tensile strength divided by average of CD
dry tensile strength,
the glassless wet-laid nonwoven mat having a basis weight of between 24.41 g/m² and 97.65 g/m² (0.5 lb/100ft² and 2.0 lb/100ft²).

2. The flooring product of claim 1, wherein:
the binder comprises one or both of an acrylic-based binder and a styrene butadiene-based binder.

3. The flooring product of claim 1, wherein:
the upper flooring material comprises one or more of a fabric layer, a vinyl layer, and a sport surface layer.

4. The flooring product of claim 1, wherein:
the plurality of polymeric fibers comprise one or more of PET fibers, acrylic fibers, polyester fibers, and polypropylene fibers.

5. The flooring product of claim 1, wherein:
the glassless wet-laid nonwoven mat comprises a plurality of layers.

6. The flooring product of claim 1, further comprising:
at least one intermediate layer disposed between the upper flooring material and the glassless wet-laid nonwoven mat.

7. The flooring product of claim 6, wherein:
the at least one intermediate layer comprises a primary backing coupled with the upper flooring material and a secondary backing coupled with the primary backing.

8. The flooring product of claim 1, wherein:
the flooring product has a dimensional stability of less than or about 0.5%, said dimensional stability is measured using ASTM D7570, Standard Test Method for Evaluation of Dimensional Stability of Pile Yarn Floor Covering.

9. The flooring product of claim 1, wherein
(i) the upper flooring material is a pile fabric layer and at least one backing layer coupled with the pile fabric layer,
(ii) the glassless wet-laid nonwoven mat is coupled with the at least one backing layer and
(iii) said flooring product being a carpet tile

10. The flooring product of claim 9, wherein:
the at least one backing comprises a primary backing coupled with the pile fabric layer and a secondary backing coupled with the primary backing.

11. The flooring product of claim 9, further comprising:
an adhesive applied to an exposed surface of the glassless wet-laid nonwoven mat.

12. The flooring product of claim 9, wherein:
the glassless wet-laid nonwoven mat further comprises between about 0.01% and 3.0% by weight of a wettability additive.

13. The flooring product of claim 12, wherein:
the wettability additive comprises glycol ester.

14. The flooring product of claim 9, wherein:
the glassless wet-laid nonwoven mat has a thickness of between about 0.1 mm and 3.0 mm.

15. A method of manufacturing a flooring product as claimed in claim 1, comprising:
providing an upper flooring material; and
coupling a glassless wet-laid nonwoven mat with a lower surface of the upper flooring material.

16. The method of manufacturing a flooring product of claim 15, wherein:
the upper flooring material comprises one or more of a fabric layer, a vinyl layer, and a sport surface layer.

17. The method of manufacturing a flooring product of claim 15, wherein:
coupling the glassless wet-laid nonwoven mat with the lower surface of the upper flooring material comprises securing a top surface of the glassless wet-laid nonwoven mat to at least one backing layer that is positioned against the lower surface of the upper flooring material.

18. The method of manufacturing a flooring product of claim 15, further comprising:
applying an adhesive to an exposed surface of the glassless wet-laid nonwoven mat; and affixing a release liner over the adhesive.

19. The method of manufacturing a flooring product of claim 15, wherein:
forming the glassless wet-laid nonwoven mat comprises passing the plurality of polymeric fibers and binder through an oven to cure the binder; and
the oven is set to a temperature of less than 176.7°C (350 °F).

20. The method of manufacturing a flooring product of claim 15, wherein:
the binder is self-cross-linking, has a cross-linking additive, or both.

## Patentansprüche

1. Bodenbelagprodukt umfassend:
ein oberes Bodenbelagmaterial;
eine glaslose, nassgelegte Vliesmatte, verbunden mit dem oberen Bodenbelagmaterial,
wobei die glaslose, nassgelegte Vliesmatte Folgendes umfasst:
eine Vielzahl von Polymerfasern und ein Bindemittel, wobei:
die Vielzahl von Polymerfasern eine lineare Massendichte zwischen etwa 1,0 Denier und 4,0 Denier aufweist;
die Vielzahl von Polymerfasern Längen zwischen etwa 6 mm und 25 mm aufweist;
das Bindemittel einen Glühverlust von mindestens etwa 20 % aufweist; und
die glaslose, nassgelegte Vliesmatte einen Heiß-Nass-%-Anteil von mindestens etwa 20 % aufweist, wobei das Heiß/Nass(%)-Prüfen an 7,62 cm x 30,48 cm (3 Zoll x 12 Zoll) großen Streifen durchgeführt wird, die 10 Minuten in ein Wasserbad mit entionisiertem (DI-)Wasser bei 81 °C ± 1 °C (180 °C ± 2 °F) untergetaucht werden, und Heiß-Nass-% den Durchschnitt der CD-Nasszugfestigkeit dividiert durch den Durchschnitt der CD-Trockenzugfestigkeit bezeichnet,
wobei die glaslose, nassgelegte Vliesmatte ein Basisgewicht zwischen 24,41 g/m² und 97,65 g/m² (0,5 lb/100 ft² und 2,0 Ib/100 ft²) aufweist.

2. Bodenbelagprodukt nach Anspruch 1, wobei:
das Bindemittel ein Bindemittel auf Acrylbasis und/oder ein Bindemittel auf StyrolButadien-Basis umfasst.

3. Bodenbelagprodukt nach Anspruch 1, wobei:
das obere Bodenbelagmaterial eines oder mehrere von einer Stoffschicht, einer Vinylschicht und einer Sportoberflächenschicht umfasst.

4. Bodenbelagprodukt nach Anspruch 1, wobei:
die Vielzahl von Polymerfasern eines oder mehrere von PET-Fasern, Acrylfasern, Polyesterfasern und Polypropylenfasern umfasst.

5. Bodenbelagprodukt nach Anspruch 1, wobei:
die glaslose, nassgelegte Vliesmatte eine Vielzahl von Schichten umfasst.

6. Bodenbelagprodukt nach Anspruch 1, ferner umfassend:
mindestens eine Zwischenschicht, die zwischen dem oberen Bodenbelagmaterial und der glaslosen, nassgelegten Vliesmatte angeordnet ist.

7. Bodenbelagprodukt nach Anspruch 6, wobei:
die mindestens eine Zwischenschicht eine mit dem oberen Bodenbelagmaterial verbundene Primärverstärkung und eine mit der Primärverstärkung verbundene Sekundärverstärkung umfasst.

8. Bodenbelagprodukt nach Anspruch 1, wobei:
das Bodenbelagprodukt eine Dimensionsstabilität von weniger als oder etwa 0,5 % aufweist, wobei die Dimensionsstabilität unter Verwendung von ASTM D7570, Standardtestverfahren zum Bewerten der Dimensionsstabilität von Bodenbelägen aus Florgarn, gemessen wird.

9. Bodenbelagprodukt nach Anspruch 1, wobei
(i) es sich bei dem oberen Bodenbelagmaterial um eine Florgewebeschicht und mindestens eine mit der Florgewebeschicht verbundene Verstärkungsschicht handelt,
(ii) die glaslose, nassgelegte Vliesmatte mit der mindestens einen Verstärkungsschicht verbunden ist und
(iii) es sich bei dem Bodenbelagprodukt um eine Teppichfliese handelt.

10. Bodenbelagprodukt nach Anspruch 9, wobei:
die mindestens eine Verstärkung eine mit der Florgewebeschicht verbundene Primärverstärkung und eine mit der Primärverstärkung verbundene Sekundärverstärkung umfasst.

11. Bodenbelagprodukt nach Anspruch 9, ferner umfassend:
einen Kleber, der auf eine freiliegende Fläche der glaslosen, nassgelegten Vliesmatte aufgetragen wird.

12. Bodenbelagprodukt nach Anspruch 9, wobei:
die glaslose, nassgelegte Vliesmatte außerdem zwischen etwa 0,01 und 3,0 Gew.-% eines Benetzbarkeitsadditivs umfasst.

13. Bodenbelagprodukt nach Anspruch 12, wobei:
das Benetzbarkeitsadditiv Glykolester umfasst.

14. Bodenbelagprodukt nach Anspruch 9, wobei:
die glaslose, nassgelegte Vliesmatte eine Dicke zwischen etwa 0,1 mm und 3,0 mm aufweist.

15. Verfahren zum Herstellen eines Bodenbelagprodukts nach Anspruch 1, umfassend:
Bereitstellen eines oberen Bodenbelagmaterials;
Verbinden einer glaslosen, nassgelegten Vliesmatte mit einer unteren Fläche des oberen Bodenbelagmaterials.

16. Verfahren zum Herstellen eines Bodenbelagprodukts nach Anspruch 15, wobei:
das obere Bodenbelagmaterial eines oder mehrere von einer Stoffschicht, einer Vinylschicht und einer Sportoberflächenschicht umfasst.

17. Verfahren zum Herstellen eines Bodenbelagprodukts nach Anspruch 15, wobei:
das Verbinden der glaslosen, nassgelegten Vliesmatte mit der unteren Fläche des oberen Bodenbelagmaterials das Befestigen einer oberen Fläche der glaslosen, nassgelegten Vliesmatte an mindestens einer Verstärkungsschicht umfasst, die an der unteren Fläche des oberen Bodenmaterials angeordnet ist.

18. Verfahren zum Herstellen eines Bodenbelagprodukts nach Anspruch 15, ferner umfassend:
Auftragen eines Klebers auf eine freiliegende Fläche der glaslosen, nassgelegten Vliesmatte; und
Anbringen eines Abziehstreifens über dem Kleber.

19. Verfahren zum Herstellen eines Bodenbelagprodukts nach Anspruch 15, wobei:
das Bilden der glaslosen, nassgelegten Vliesmatte das Durchführen der Vielzahl von Polymerfasern und des Bindemittels durch einen Ofen umfasst, um das Bindemittel auszuhärten. und
der Ofen auf eine Temperatur von weniger als etwa 176,7 °C (350 °F) eingestellt ist.

20. Verfahren zum Herstellen eines Bodenbelagprodukts nach Anspruch 15, wobei:
das Bindemittel selbstvernetzend ist und/oder ein vernetzendes Additiv aufweist.

## Revendications

1. Produit de revêtement de sol, comprenant:
un matériau de revêtement de sol supérieur;
un tapis non tissé posé par voie humide sans verre couplé avec le matériau de revêtement de sol supérieur, le tapis non tissé posé par voie humide sans verre comprenant:
une pluralité de fibres polymères et un liant, où:
la pluralité de fibres polymères ont une densité de masse linéaire comprise entre environ 1,0 denier et 4 deniers:
la pluralité de fibres polymères ont des longueurs comprises entre environ 6 mm et 25 mm;
le liant a une perte à l'allumage d'au moins environ 20 % ; et
le tapis non tissé posé par voie humide sans verre a un % chaud-humide d'au moins 20 %, ledit essai chaud-humide (%) est effectué sur des bandes de 7,62 cmX30,48cm (3"X12") immergées dans un bain d'eau avec de l'eau déionisée (DI) à 81 °C ± 1 °C (180° ± 2° F) pour 10 minutes et chaud-humide (%) est la moyenne de la résistance à la traction humide du CD divisée par la moyenne de la résistance à la traction sèche du CD,
le tapis non tissé posé par voie humide sans verre ayant un poids de base compris entre 24,41 g/m² et 97,65 g/m² (0,5 !b/100 ft² et 2,0 lb/100 ft²).

2. Produit de revêtement de sol selon la revendication 1, où:
le liant comprend l'un ou les deux d'un liant à base acrylique et d'un liant à base de styrène -butadiène.

3. Produit de revêtement de sol selon la revendication 1, où:
le matériau de revêtement de sol supérieur comprend l'un ou plusieurs d'entre une couche de tissu, une couche de vinyle, et une couche de surface sportive.

4. Produit de revêtement de sol selon la revendication 1, où:
la pluralité de fibres polymères comprend une ou plusieurs fibres PET, fibres acryliques, fibres de polyester, et fibres de polypropylène.

5. Produit de revêtement de sol selon la revendication 1, où:
le tapis non tissé posé par voie humide sans verre comprend une pluralité de couches.

6. Produit de revêtement de sol selon la revendication 1, comprenant en outre:
au moins une couche intermédiaire disposée entre le matériau de revêtement de sol supérieur et le tapis non tissé posé par voie humide sans verre.

7. Produit de revêtement de sol selon la revendication 6, où:
au moins une couche intermédiaire comprend un support primaire couplé avec le matériau de revêtement de sol supérieur et un support secondaire couplé avec le support primaire.

8. Produit de revêtement de sol selon la revendication 1, où:
le produit de revêtement de sol a une stabilité dimensionnelle de moins de ou d'environ 0,5%, ladite stabilité dimensionnelle est mesurée utilisant l'ASTM D7570, Méthode D'essai Standard pour L'évaluation de la Stabilité Dimensionnelle du Revêtement de Sol en Fils de Velours.

9. Produit de revêtement de sol selon la revendication 1, où:
(i) le matériau de revêtement de sol supérieur est une couche de tissu de velours et au moins une couche de support couplée avec la couche de tissu de velours,
(ii) le tapis non tissé posé par voie humide sans verre est couplé avec au moins une couche de support et
(iii) ledit produit de revêtement de sol étant une moquette.

10. Produit de revêtement de sol selon la revendication 9, où:
au moins un support comprend un support primaire couplé avec la couche de tissu de velours et un support secondaire couplé avec le support primaire.

11. Produit de revêtement de sol selon la revendication 9, comprenant en outre:
un adhésif appliqué à une surface exposée du tapis non tissé posé par voie humide sans verre.

12. Produit de revêtement de sol selon la revendication 9, où:
le tapis non tissé posé par voie humide sans verre comprend en outre entre environ 0,01 % et 3,0 % en poids d'un additif mouillant.

13. Produit de revêtement de sol selon la revendication 12, où:
l'additif mouillant comprend un ester de glycol.

14. Produit de revêtement de sol selon la revendication 9, où:
le tapis non tissé posé par voie humide sans verre a une épaisseur comprise entre environ 0,1 mm et 3,0 mm.

15. Procédé de fabrication un produit de revêtement de sol selon la revendication 1, comprenant:
pourvoir un matériau de revêtement de sol supérieur; et
coupler un tapis non tissé posé par voie humide sans verre avec une surface inférieure du matériau de revêtement de sol supérieur.

16. Procédé de fabrication un produit de revêtement de sol selon la revendication 15, où
le matériau de revêtement de sol supérieur comprend l'un ou plusieurs d'entre une couche de tissu, une couche de vinyle, et une couche de surface sportive.

17. Procédé de fabrication un produit de revêtement de sol selon la revendication 15, où
coupler un tapis non tissé posé par voie humide sans verre avec une surface inférieure du matériau de revêtement de sol supérieur comprend assurer une surface de dessus au tapis non tissé posé par voie humide sans verre à au moins une couche d support qui est positionnée contre la surface inférieure du matériau de revêtement de sol supérieur.

18. Procédé de fabrication un produit de revêtement de sol selon la revendication 15, comprenant en outre:
appliquer un adhésif à une surface exposée du tapis non tissé posé par voie humide sans verre ; et apposer une couche antiadhésive sur l'adhésif.

19. Procédé de fabrication un produit de revêtement de sol selon la revendication 15, où
former le tapis non tissé posé par voie humide sans verre comprend passer la pluralité de fibres polymères et le liant par un four pour durcir le liant ; et le four est réglé à une température de moins de 176,7 °C (350 °F).

20. Procédé de fabrication un produit de revêtement de sol selon la revendication 15, où le liant est auto-réticulable, a un additif de réticulation, ou les deux.
